# EUROPÄISCHE PATENTSCHRIFT

(11) **EP 0 586 900 B1**
(45) Veröffentlichungstag und Bekanntmachung des Hinweises auf die Patenterteilung: **03.01.1996**
(21) Anmeldenummer: 93112702.1
(22) Anmeldetag: 07.08.1993
(51) Int. Cl.: F16H 63/42, G05G 1/28, G05G 1/06, B60R 16/02

(54) **Schaltstellungsanzeige**
Shift lever position indicating device
Dispositif indicateur de position de levier de changement de vitesses

(30) Priorität: 31.08.1992 DE 4228982
(43) Veröffentlichungstag der Anmeldung: 16.03.1994
(73) Patentinhaber: LEMFOERDER METALLWAREN AG., D-49441 Lemförde (DE)
(72) Erfinder: Ersoy, Metin, Dr.-Ing., D-65396 Walluf 2 (DE)
(74) Vertreter: Bruse, Willy Hans Heinrich

(56) Entgegenhaltungen:
- DE-A- 2 035 830
- DE-A- 3 939 030
- DE-U- 8 902 383
- US-A- 2 672 116

## Beschreibung

Die Erfindung beschreibt eine Schaltstellungsanzeige für den Schalthebel eines Kraftfahrzeuggetriebes nach dem Oberbegriff des Patentanspruches 1.

Anzeigevorrichtungen für den vom Fahrzeuglenker gewählten Getriebegang sind in vielfachen Ausführungen bekannt.
Aus der Schrift DE 39 39 030 geht eine Schaltstellungsanzeige hervor, deren Anzeigeelement sich unter einer durchscheinenden Abdeckung im oberen Bereich des Schaltknopfes befindet. Zur Symbolisierung des gewählten Getriebeganges dient hierbei ein alpha-numerisches LED, bzw. LCD-Element, dessen Ansteuerung über Stellungsschalter erfolgt. Dabei wird beim Einlegen des gewählten Ganges ein Schaltfinger, der sich am unteren Ende des Schalthebels befindet, mit einem auf den Schaltstangen angeordneten Mitnehmer in Eingriff gebracht, wodurch in der Endlage des Schalthebels über den Mitnehmer der Stromkreis geschlossen wird, der das dem gewählten Gang entsprechende Symbol im Anzeigeelement zum Aufleuchten bringt. Eine derartige Ausführung ist schmutz- und korrosionsanfällig. Sie ist abhängig von der Bordspannung des Fahrzeuges, die im Fahrbetrieb Schwankungen unterliegt. Es ist eine aufwendige elektronische Schaltung erforderlich, um den fehlerfreien Betrieb der Anzeige zu gewährleisten. Infolge der Empfindlichkeit sind erhebliche Schutzmaßnahmen notwendig, ohne die ein dauerhafter Betrieb kaum möglich erscheint.

Aus der DE 39 29 268 ist ein KFZ-Getriebe bekannt, das einen Wählhebel zum Einlegen der einzelnen Fahrstufen aufweist, und eine getrennt dazu angeordnete Ganganzeige, die zum einen durch ihre Ausbildung die möglichen Betätigungsrichtungen des Wählhebels anzeigt, und zum anderen Aufschluß über die momentan eingelegte Fahrstufe und über die Möglichkeiten des Fahrstufenwechsels gibt. Das Anzeigebild ändert sich hierbei je nach eingelegter Fahrstufe.

Der Erfindung liegt die Aufgabe zugrunde, eine Schaltstellungsanzeige zu realisieren, die dem Fahrer jederzeit gut erkennbar den eingelegten Getriebegang anzeigt. Dabei ist eine kostengünstige, wartungsfreie Variante zu schaffen, die auch unabhängig vom Bordnetz einsatzbereit ist.

Die Erfindung löst diese Aufgabe durch eine Ausbildung mit Merkmalen nach dem Kennzeichen des Patentanspruches 1.
Entsprechend dieser Ausbildung werden Lichtleiter dazu verwendet, einfallendes Licht auf eine Kulisse zu leiten, oder diese zu durchscheinen. Die Kulisse stellt die den Gangstufen entsprechenden Symbole vorzugsweise in Form von Spiegelflächen dar, die das einfallende Licht reflektieren und über Lichtleiter in den Anzeigebereich des Schaltknopfes zurück führen. Die Lichtleiter sind innerhalb des hohl ausgebildeten Schalthebels als Bündel verlegt. Sie beginnen unterhalb einer durchsichtigen Abdeckung im Schaltknopf und enden dicht oberhalb der reflektierenden Kulisse. Das einfallende Licht wird durch die Abdeckung, über die Lichtleiter, die nicht zur Anzeige benötigt werden, zur Kulisse geleitet, hier reflektiert und anschließend in den Anzeigebereich zurück geführt. Um fehlendes Tageslicht zu kompensieren, werden erfindungsgemäß Kontrolllampen des Fahrzeuges als zusätzliche Energiequelle genutzt. Eine bevorzugte Ausführung stellt die Einleitung des zur Anzeige benötigten Lichtes über eine Zuführung aus einem der Fahrzeugscheinwerfer dar. Durch die Verwendung lichtleitender Übertragungssysteme ist es erfindungsgemäß möglich, eine künstliche Lichtquelle unmittelbar unter der Kulisse zu positionieren. Die den gewählten Gangstufen entsprechenden Symbole bestehen hierbei aus lichtdurchlässigem Material, wobei die den Gangstufen entsprechenden Symbole durchscheinend sind. Das künstliche Licht ist direkt unter den lichtdurchlässigen Symbolen der Kulisse stationiert oder wird in der zuvor beschriebenen Weise an die Kulisse herangeführt.

Ausführungsbeispiele der Erfindung zeigen die Zeichnungen.

Es ist dargestellt:
**Figur 1**:
   ein Schnitt entlang der Schaltebene des Schalthebels an einem Automatik-Schalthebel
**Figur 2**:
   die Lichtführung innerhalb des Schalthebels bei reflektierender Kulisse
**Figur 3**:
   die symbolische Darstellung der Gangstufen für ein Automatikgetriebe
**Figur 4**:
   das Anzeigefeld unterhalb der durchscheinenden Abdeckplatte im Schaltknopf.

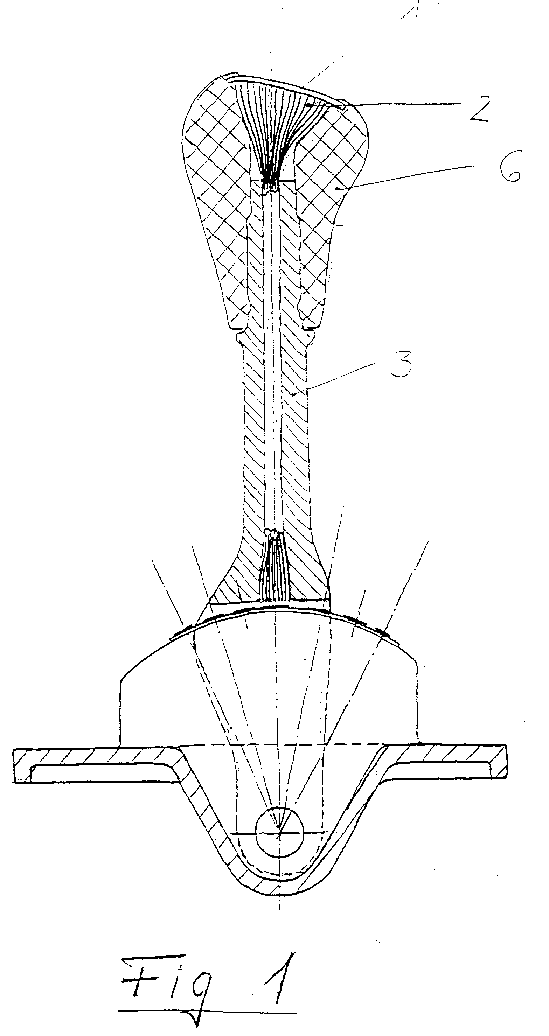

Die Schaltstellungsanzeige besteht, wie in Figur 1 gezeigt, aus einer durchsichtigen Abdeckung oder Abdeckplatte (1) im oberen, für den Fahrzeuglenker gut sichtbaren, Bereich des Schaltknopfes (6). Unmittelbar unterhalb dieser Abdeckplatte beginnt ein Bündel Lichtleiter (2), das innerhalb des hohl ausgebildeten Schalthebels (3) verlegt ist und eine Kulisse (4) dicht überstreicht, die erfindungsgemäß den gewählten Gangstufen entsprechende Symbole darstellt. Eine vorteilhafte Lösung ist die Verwendung durchscheinender Materialien zur Symbolisierung des eingelegten Ganges in der Kulisse, wobei eine Lichtzuführung von Lichtquellen des Fahrzeuges ebenso vorgesehen ist, wie die Nutzung natürlichen Lichtes. Für eine größtmögliche Lichtintensität ist die Lichtquelle direkt unterhalb der durchscheinenden Kulisse vorzusehen. Natürlich kann aber auch hierbei die Zuführung des benötigten Lichtes über Lichtleiter erfolgen.

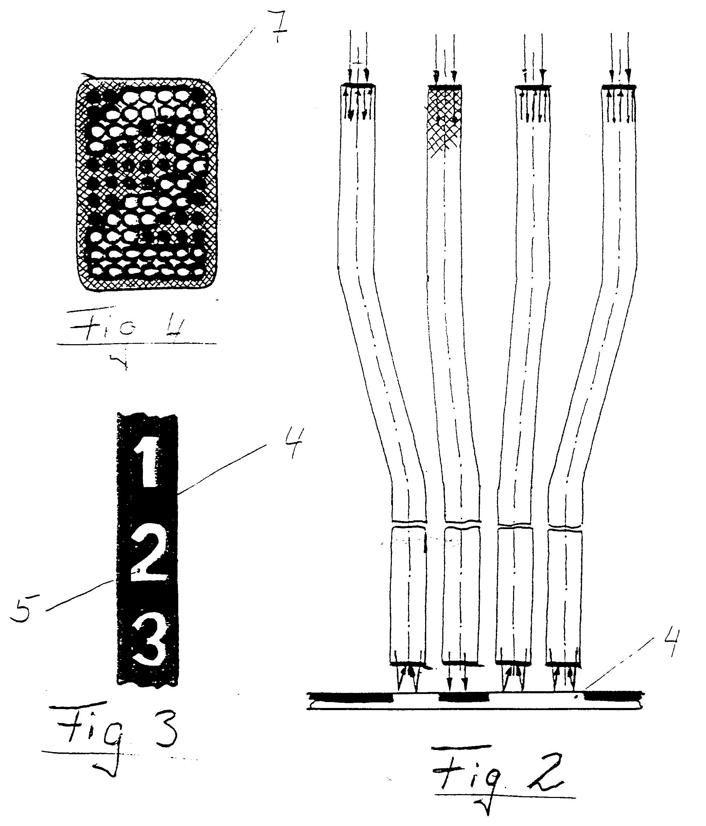

In Figur 2 ist die Lichtführung durch die im Schalthebel verlegten Lichtleiter dargestellt, wenn für die Ganganzeige reflektierende Symbole, zum Beispiel in Form von Spiegelflächen, auf der Kulisse (4) verwendet werden. Dabei überstreicht das dem Schaltknopf gegenüber liegende, untere Ende des Schalthebels diese Kontur sehr dicht. Hier enden erfindungsgemäß auch die im Schalthebel verlegten Lichtleiter. Das einfallende Licht durchdringt die durchsichtige Abdeckplatte, wird über die nicht zur Anzeige benötigten Lichtleiter zur Kulisse geführt, hier reflektiert und über die Lichtleiter in den Anzeigebereich zurück geführt, wo die symbolisierte Anzeige des gewählten Getriebeganges erfolgt.

In Figur 3 wird die Kulisse (4) gezeigt. Diese besteht bis auf die anzuzeigenden Symbole aus lichtabsorbierendem Material. Die Gangsymbole (5) sind durchscheinend oder reflektierend.

Figur 4 stellt die für den Fahrzeuglenker sichtbare Lochschablone (7) mit den darunter befindlichen Lichtleitern dar. Diese Lochschablone befindet sich unmittelbar unterhalb der lichtdurchlässigen Abdeckung im Schalthebelknopf.

## Patentansprüche

1. Schaltstellungsanzeige mit einem Schalthebel (3) zur Wahl und zum Einlegen des gewählten Getriebeganges eines Getriebes und mit einem an diesem Schalthebel (3) befestigten Schalthebelknopf (6), der eine Anzeigeeinrichtung enthält, die ein der gewählten Gangstufe entsprechendes Symbol (5) anzeigt und sich unterhalb einer durchsichtigen Abdeckung (1) befindet
*dadurch gekennzeichnet, daß*
unter der lichtdurchlässigen Abdeckung (1) ein Bündel Lichtleiter (2) angeordnet ist, das innerhalb des hohl ausgebildeten Schalthebels (3) verläuft und oberhalb einer Kulisse (4) endet, die entsprechend der Schaltkulisse angeordnet ist und Symbole (5) der gewählten Gangstufe darstellt.

2. Schaltstellungsanzeige nach Anspruch 1,
*dadurch gekennzeichnet, daß*
die Symbole darstellende Kulisse (4) ein Spiegel ist, der das Symbol des gewählten Getriebeganges darstellt und das einfallende, über die Lichtleiter zur Kulisse geführte Licht reflektiert, dieses über die Lichtleiter in den Anzeigebereich des Schaltknopfes zurückleitet, wo der gewählte Gang in Ziffern-oder Buchstabenform dargestellt ist.

3. Schaltstellungsanzeige nach einem oder mehreren der Ansprüche 1-2.
*dadurch gekennzeichnet*, *daß* sie mit
einer natürlichen Lichtquelle wirksam ist.

4. Schaltstellungsanzeige nach einem oder mehreren der Ansprüche 1-3.
*dadurch gekennzeichnet daß*,sie
eine künstliche Lichtquelle aufweist.

5. Schaltstellungsanzeige nach einem oder mehreren der Ansprüche 1-4.
*dadurch gekennzeichnet, daß*
das im Schalthebelknopf (6) integrierte Anzeigeelement aus einer Lochschablone (7) besteht.

6. Schaltstellungsanzeige nach einem oder mehreren der Ansprüche 1-5.
*dadurch gekennzeichnet, daß* die Symbole darstellende Kulisse (4) mittels durchscheinender Materialien das Symbol des gewählten Getriebeganges darstellt, das Licht mittels Lichtleiter unter die Kulisse geführt wird und durch die lichtdurchlässigen Symbole scheint, und so über Lichtleiter in den Anzeigebereich gelangt.

## Claims

1. Gearshift position indicator having a gearshift lever (3) for selecting and engaging the selected gearbox speed of a gearbox, and having a gearshift lever knob (6) which is attached to the said gearshift lever (3) and contains an indicator arrangement which indicates a symbol (5) corresponding to the speed stage selected and is located underneath a transparent cover (1),
*characterized in that*
there is disposed under the light-permeable cover (1) a bundle of light-conductors (2) which extends inside the gearshift lever (3) of hollow construction and ends above a gate (4) which is disposed in a manner corresponding to the gearshift gate and displays symbols (5) of the speed stage selected.

2. Gearshift position indicator according to Claim 1,
*characterized in that*
the gate (4) displaying symbols is a mirror which displays the symbol of the gearbox speed selected, reflects the incident light guided to the gate via the light-conductors and conducts the said light back, via the light-conductors, into the indicator region of the gearshift knob, where the speed selected is displayed in the form of figures or letters.

3. Gearshift position indicator according to one or more of Claims 1 to 2,
*characterized in that*
it is operative with a natural light source.

4. Gearshift position indicator according to one or more of Claims 1 to 3,
*characterized in that*
it has an artificial light source.

5. Gearshift position indicator according to one or more of Claims 1 to 4,
*characterized in that*
the indicator element integrated in the gearshift lever knob (6) consists of a perforated template (7).

6. Gearshift position indicator according to one or more of Claims 1 to 5,
*characterized in that*
the gate (4) displaying symbols displays, by means of translucent materials, the symbol of the gearbox speed selected, and the light is guided under the gate by means of light-conductors and shines through the light-permeable symbols and thus passes into the indicator region via light-conductors.

## Revendications

1. Dispositif indicateur de position d'un levier de changement de vitesses comportant un levier de changement de vitesse (3) pour la sélection et l'enclenchement de la position choisie d'une boîte de vitesses, et une rotule du levier de changement de vitesse (6) fixée à ce levier de changement de vitesse (3), ladite rotule comprenant un dispositif d'affichage qui affiche un symbole (5) correspondant à la position choisie, et étant disposée au-dessous d'un couvercle transparent (1), caractérisé en ce que, sous le couvercle (1) translucide, est monté un faisceau de câbles fibre optique (2) qui passe à l'intérieur du levier creux de changement de vitesse (3) et se termine au-dessus d'une coulisse (4) fixée de manière correspondante à la coulisse de changement de vitesse et présentant des symboles (5) de la position choisie.

2. Dispositif indicateur de position selon la revendication 1, caractérisé en ce que la coulisse (4) présentant des symboles est un miroir présentant le symbole de la vitesse choisie et réfléchissant la lumière incidente conduite à la coulisse par des câbles fibre optique, cette lumière étant renvoyée par les câbles fibre optique à la partie d'affichage de la rotule du levier où la position choisie est représentée sous forme de chiffres ou de lettres.

3. Dispositif indicateur de position selon l'une des revendications 1 à 2, caractérisé en ce qu'il est actif avec une source de lumière naturelle.

4. Dispositif indicateur de position selon l'une des revendications 1 à 3, caractérisé en ce qu'il comporte une source de lumière artificielle.

5. Dispositif indicateur de position selon l'une des revendications 1 à 4, caractérisé en ce que l'élément d'affichage intégré dans la rotule du levier de changement de vitesse (6) se compose d'un cache à trous (7).

6. Dispositif indicateur de position selon l'une des revendications 1 à 5, caractérisé en ce que la coulisse (4) présentant des symboles, représente le symbole de la position choisie à l'aide de matériaux transparents, en ce que de la lumière est conduite sous la coulisse à l'aide de câbles fibre optique et apparaît au moyen de symboles translucides, et arrive ainsi à la partie d'affichage par des câbles fibre optique.
